# EUROPEAN PATENT SPECIFICATION

(11) **EP 3 926 249 B1**
(45) Date of publication and mention of the grant of the patent: **12.06.2024**
(21) Application number: 19922305.8
(22) Date of filing: 25.06.2019
(51) Int. Cl.: F24F 11/41, F24F 11/64, F24F 11/77, F24F 11/86, F24F 11/88, F24F 140/00, F24F 13/22

(54) **AIR CONDITIONER AND CONDENSATION PREVENTING METHOD AND DEVICE THEREOF**
KLIMAANLAGE SOWIE KONDENSATIONSVERHINDERUNGSVERFAHREN UND -VORRICHTUNG DAVON
CLIMATISEUR ET PROCÉDÉ ET DISPOSITIF ASSOCIÉS PERMETTANT D'EMPÊCHER LA CONDENSATION

(30) Priority: 29.03.2019 CN 201910250595
(43) Date of publication of application: 22.12.2021
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: XI, Zhanli, Foshan, Guangdong 528311 (CN); QI, Hongjie, Foshan, Guangdong 528311 (CN)
(74) Representative: Whitlock, Holly Elizabeth Ann
(86) International application number: PCT/CN2019/092734
(87) International publication number: WO 2020/199376

(56) References cited:
- EP-A1- 3 467 394
- CN-A- 102 889 668
- CN-A- 106 918 121
- CN-A- 107 621 050
- CN-A- 109 154 450
- JP-A- H10 103 743

## Description

### FIELD

The present invention relates to the field of air conditioner technology, and particularly to an air conditioner, a condensation preventing method and a device thereof.

### BACKGROUD

At present, a minimum operating voltage of a variable frequency air conditioner may reach to 150V, where a wind speed of an indoor fan is high, and an evaporation temperature is relatively high, and the produced condensation water may flow away through a water pan of an indoor unit, such that there is no risk of generating condensation.

In the related art, the minimum operating voltage of a variable frequency air conditioner may reach to 40V, or even lower. The lower a voltage is, the lower a rotational speed of the indoor fan is. At a same frequency, a temperature of an evaporator will be greatly reduced, and serious condensation will occur at the evaporator, causing water blowing and dripping or the like of the air conditioner, and thereby adversely affecting reliability of the operation of the air conditioner. CN109154450A relates generally to an outdoor unit of an air conditioner capable of operating while preventing thermal breakdown of a switching element.

### SUMMARY

Aspects of the invention are set out in the claims. The present invention provides in embodiments an air conditioner, a condensation preventing method and a device thereof, which can limit an operating frequency of a compressor according to a current input voltage of the air conditioner, thereby effectively solving problems of the water blowing and dripping from an indoor heat exchanger when an input voltage is low, and thus improving reliability of the operation of the air conditioner.

The present invention provides in embodiments a condensation preventing method for an air conditioner, according to claim 1.

In addition, the condensation preventing method for an air conditioner provided according to the above embodiments of the present disclosure may further include the following additional technical features.

In an embodiment of the present invention, said controlling the operating frequency of the compressor to be lower than or equal to the target maximum operable frequency further includes: acquiring a target minimum operable frequency of the compressor of the air conditioner; and controlling the operating frequency of the compressor to be higher than or equal to the target minimum operable frequency.

In an embodiment of the present disclosure, said controlling the operating frequency of the compressor to be higher than or equal to the target minimum operable frequency further includes: acquiring an indoor temperature, and acquiring a dew point temperature according to the current humidity and the indoor temperature; and acquiring a temperature of an indoor unit coil of the air conditioner, identifying that the temperature of the indoor unit coil is lower than or equal to the dew point temperature, controlling a current operating frequency of the compressor to decrease and controlling a current decreased operating frequency to be higher than or equal to the target minimum operable frequency.

In an embodiment of the present invention, the method as described above futher includes:
a maximum operable frequency of the compressor being positively correlated with an input voltage of the air conditioner.

In an embodiment of the present invention, the method as described above futher includes the maximum operable frequency of the compressor being positively correlated with an actual rotation speed of the indoor fan.

In an embodiment of the present invention, the method as described above futher includes the maximum operable frequency of the compressor being negatively correlated with the indoor humidity.

The present invention provides in embodiments a condensation preventing device for an air conditioner, according to claim 7.

The present invention provides in embodiments an air conditioner, including: a condensation preventing device for an air conditioner as described above.

The present invention provides in embodiments an electronic device, including: a memory; and a processor, wherein the processor executes, by reading an executable program code stored in the memory, a program corresponding to the executable program code, to achieve a condensation preventing method for an air conditioner as described above.

The present invention provides in embodiments a computer-readable storage medium having stored therein a computer program that, when executed by a processor, achieves a condensation preventing method for an air conditioner as described above.

One or more technical solutions provided in embodiments of the present invention have at least the following technical effects or advantages.

The technical solutions provided in embodiment of the present invention can effectively solve problems of the water blowing and dripping fromthe indoor heat exchanger when the input voltage is low, and thus improving reliability of the operation of the air conditioner.

### BRIEF DESCRIPTION OF THE DRAWINGS

Figure 1 is a flow chart showing a condensation preventing method for an air conditioner in embodiment 1 of the present invention;
Figure 2 is a structure diagram showing a system of an air conditioner in embodiment 1 of the present invention,
Figure 3 is a block diagram showing a condensation preventing device for an air conditioner in embodiment 2 of the present invention,
Figure 4 is a block diagram showing an air conditioner in embodiment 3 of the present invention.

### DETAILED DESCRIPTION

The minimum operating voltage of a variable frequency air conditioner in the related art may reach to 40V, or even lower; and the lower the voltage is, the lower a rotational speed of the indoor fan is. At a same frequency, the temperature of the evaporator will be greatly reduced, and serious condensation will occur at the evaporator, causing water blowing and dripping and the like of the air conditioner, and thereby adversly affecting reliability of the operation of the air conditioner. For solving the above technical problems, the present invention provides in embodiments a condensation preventing method for an air conditioner, which can limit an operating frequency of a compressor according to a current input voltage of the air conditioner, thereby effectively solving problems of the water blowing and dripping from an indoor heat exchanger when the input voltage is low, and thus improving reliability of the operation of the air conditioner.

Explanatory embodiments of the present invention will be described in more detail below with reference to drawings for a better understanding of the above technical solutions. Although the explanatory embodiments of the present invention are shown in the drawings, it should be understood that the present disclosure may be implemented in various forms and should not be limited by the embodiments as described herein. On the contrary, these embodiments are provided for a more clearly understanding of the present invention and to fully convey the scope of the present invention to those skilled in the art. The invention is limited by the appended claims.

Reference will be made in detail to the above technical solutions with reference to drawings and specific embodiments of the present invention, for a better understanding of the above technical solutions.

### Embodiment 1

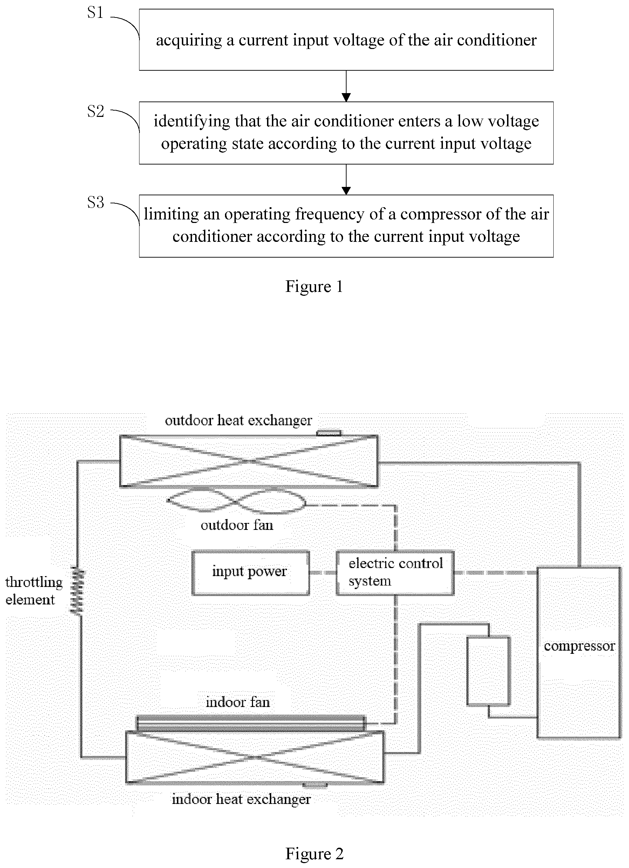

Figure 1 is a flow chart showing a condensation preventing method for an air conditioner in embodiment 1 of the present invention.

In an embodiment of the present disclosure, as shown in Figure 2, an air conditioner may include: an input power, an electric control system, a compressor, an outdoor heat exchanger, an indoor heat exchanger, an outdoor fan, an indoor fan and a throttling element. The outdoor fan is set corresponding to the outdoor heat exchanger, and the indoor fan is set corresponding to the indoor heat exchanger. One end of the compressor is connected to one end of the outdoor heat exchanger, and the other end of the outdoor heat exchanger is connected to one end of the throttling element, and the other end of the throttling element is connected to one end of the indoor heat exchanger, and the other end of the indoor heat exchanger is connected to the other end of the compressor. The electric control system is respectively connected with the input power, the indoor fan, the outdoor fan and the compressor.

When the air conditioner is operated in a cooling mode, a high-temperature and high-pressure gaseous refrigerant out of the compressor first enters the outdoor heat exchanger for heat exchenge, and then passes through the throttling element for throttling and pressure reduction followed by entering the indoor heat exchanger. After passing through the indoor heat exchanger for heat exchange, the high-temperature and high-pressure gaseous refrigerant returns to the compressor.

When the air conditioner is operated in a heating mode, the high-temperature and high-pressure gaseous refrigerant out of the compressor first enters the indoor heat exchanger for heat exchange, and then passes through the throttling element for throttling and pressure reduction followed by entering the outdoor heat exchanger. After passing through the outdoor heat exchanger for heat exchange, the high-temperature and high-pressure gaseous refrigerant returns to the compressor.

As shown in Figure 1, the condensation preventing method for an air conditioner of embodiments of the present invention includes the following steps: S1 to S3.

At S1, a current input voltage of the air conditioner is acquired.

At S2, it is identified that the air conditioner enters a low voltage operating state according to the current input voltage.

At S3, an operating frequency of a compressor of the air conditioner is limited according to the current input voltage.

Specifically, during the operation of the air conditioner, the current input voltage of the air conditioner is acquired, and the current input voltage of the air conditioner is judged. When the input voltage of the air conditioner is lower than a preset voltage value which may be demarcated according to the actual situation, it is deemed that the air conditioner enters the low voltage operating state. At the moment, the rotational speed of the indoor fan is decreased. At a same frequency, the evaporation temperature of the indoor heat exchanger will be also decreased. When water vapor reaches a degree of saturation in the air, it will condense at an object (evaporator) with a relatively low temperature, thereby generating condensation and causing condensated water to be dripped or blowed from the indoor unit. For preventing the condensated water from being dripped or blowed from the indoor uint, the operating frequency of the compressor of the air conditioner is limited, i.e., the operating frequency of the compressor should be reduced correspondingly along with the decrease of the input voltage, to improve the temperature of the indoor heat exchanger, thereby avoiding the condensation from occurring and preventing the condensed water from being dripped or blowed from the indoor unit accordingly.

In the invention, said limiting an operating frequency of a compressor of the air conditioner according to the current input voltage further includes: acquiring a current actual rotation speed of an indoor fan of the air conditioner; acquiring a target maximum operable frequency of the compressor of the air conditioner according to the current input voltage and the current actual rotation speed; updating the target maximum operable frequency according to an acquired current indoor humidity; and controlling the operating frequency of the compressor to be lower than or equal to the target maximum operable frequency. The target maximum operable frequency of the compressor is set for limiting the operating frequency of the compressor not to exceed the target maximum operable frequency, to prevent the air conditioner from generating condensation such as water blowing and dripping when the rotational speed of the indoor fan of the air conditioner is decreased and the condensation is serious.

Specifically, a Voltage - Rotational speed - Frequency table is pre-stored in the air conditioner, as shown in Table 1. When the air conditioner enters the low voltage operating state, the current actual rotation speed of the indoor fan is acquiried, and the pre-stored Voltage - Rotational speed - Frequency table is called. The corresponding target maximum operable frequency of the compressor is obtained according to the current input voltage and the current actual rotation speed, and the compressor is controlled to operate at a frequency not higher than the target maximum operable frequency.

**Table 1**

| Voltage - Rotational speed - Frequency | | | | | | | |
|---|---|---|---|---|---|---|---|
| Input voltage (V) | V1 | V2 | V3 | V4 | V5 | ... | Vn |
| Actual rotation speed of indoor fan (rpm) | r1 | r2 | r3 | r4 | r5 | ... | rn |
| target maximum operable frequency (f) | f1 | f2 | f3 | f4 | f5 | ... | fn |

As shown in Table 1, V1<V2<V3<...<Vn, the corresponding actual rotation speed of the indoor fan r1<r2<r3<...<rn, and the corresponding target maximum operable frequency of the compressor f1<f2<f3<...<fn, i.e., a maximum operable frequency of the compressor is positively correlated with the input voltage of the air conditioner, and the maximum operable frequency of the compressor is positively correlated with the actual rotation speed of the indoor fan.

It would be understood that, the target maximum operable frequency of the compressor may also be acquired by calculation according to a formula method. The target maximum operable frequency of the compressor is positively correlated with the actual rotation speed of the indoor fan and the input voltage, and thus the maximum operable frequency f may be calculated by the formula method according to the input voltage V and the actual rotation speed r with the following formula: f=f(V,r).

In an embodiment of the present invention, said controlling the operating frequency of the compressor to be lower than or equal to the target maximum operable frequency further includes: acquiring a target minimum operable frequency of the compressor of the air conditioner; and controlling the operating frequency of the compressor to be higher than or equal to the target minimum operable frequency. The target minimum operable frequency of the compressor is set for limiting a minimum operating frequency of the compressor not to be lower than the target minimum operable frequency to ensure a pipeline vibration to be within an allowable range, as the lower the frequency, the greater the pipeline vibration when the compressor is operated at a low frequency.

Specifically, when the operating frequency of the compressor is reduced according to the current input voltage, if the operating frequency of the compressor reaches the target minimum operable frequency of the compressor, the compressor will not be subjected to frequency reduction to avoid the pipeline from excessive vibration, which adversely affecting stable operation of the air conditioner. When the operating frequency of the compressor reaches the target minimum operable frequency of the compressor, the opening degree of the throttling element may also be adjusted to avoid generating condensation, and thus preventing condensation from occurring at the indoor heat exchanger.

In an embodiment of the present invention, said controlling the operating frequency of the compressor to be higher than or equal to the target minimum operable frequency further includes: acquiring an indoor temperature, and acquiring a dew point temperature according to the current humidity and the indoor temperature; and acquiring a temperature of an indoor unit coil of the air conditioner, identifying that the temperature of the indoor unit coil is lower than or equal to the dew point temperature, controlling a current operating frequency of the compressor to decrease, and controlling a current decreased operating frequency to be higher than or equal to the target minimum operable frequency.

Specifically, the indoor current humidity and the indoor temperature may be acquired by a temperature and humidity sensor installed at the indoor unit of the air conditioner; alternatively, the indoor current humidity and the indoor temperature are acquired by data transmission between the air conditioner and other household appliances. The dew point temperature is then acquired according to the current humidity and the indoor temperature. For example, the dew point temperature may be acquired according to a preset Humidity - Temperature - Dew point temperature table.

When the current input voltage is constant, the temperature of the indoor unit coil may be calculated according to the indoor temperature and indoor humidity; alternatively the temperature of the indoor unit coil is acquired by a temperature sensor installed at the indoor unit coil, and it is judged between the temperature of the indoor unit coil and the dew point temperature. When the temperature of the indoor unit coil is lower than or equal to the dew point temperature, it means that condensation water will be generated. At the moment, the operating frequency of the compressor is reduced to be not lower than the target minimum operable frequency until the temperature of the indoor unit coil is higher than the dew point temperature. When the temperature of the indoor unit coil is higher than the dew point temperature, no condensation water will be generated.

Similarly, when the operating frequency of the compressor is reduced to the target minimum operable frequency and the temperature of the indoor unit coil is still lower than or equal to the dew point temperature, the opening degree of the throttling element may also be adjusted to avoid generating condensation.

According to the invention, the target maximum operable frequency is updated according to the current humidity.

Said updating the target maximum operable frequency according to the current humidity includes: acquiring a frequency correction parameter according to the current humidity, and updating the target maximum operable frequency with the frequency correction parameter.

For example, in an embodiment of the present invention, said acquiring the target maximum operable frequency of the compressor of the air conditioner according to the current input voltage and the current actual rotation speed may include: inquiring and acquiring a candidate maximum operable frequency of the compressor of the air conditioner according to the current input voltage and the current actual rotation speed; determining the target maximum operable frequency according to the candidate maximum operable frequency; and updating the target maximum operable frequency according to the current humidity, which includes: determining a target range within which the current humidity is, and reselecting the candidate maximum operable frequency corresponding to the target range as the target maximum operable frequency. For example, when the input voltage is constant, it is shown in Table 2.

**Table 2**

| Voltage - Rotational speed - Frequency | | | | |
|---|---|---|---|---|
| Input voltage (V) | V1 | | | |
| Actual rotation speed of indoor fan (rpm) | r1 | | | |
| Current humidity (Φ) | Φ1 ∈ (80%, 100%] | Φ2 ∈ (60%,80%] | Φ3 ∈ (40%,60%] | Φ4 ∈ (0,40%] |
| target maximum operable frequency (f) | f1 | f2 | f3 | f4 |

The target maximum operable frequency f of the compressor may be limited according to the detected indoor humidity Φ, thereby increasing the temperature of the indoor heat exchanger, and thus suppressing generation of condensation and water blowing. For example, when the current humidity Φ1 ∈ (80%,100%], the target maximum operable frequency of the compressor is f1; when the current humidity Φ2 ∈ (60%,80%], the target maximum operable frequency of the compressor is f2; when the current humidity Φ3 ∈ (40%,60%], the target maximum operable frequency of the compressor is f3; and when the current humidity Φ4 ∈ (0,40%], the target maximum operable frequency of the compressor is f4, where f1<f2<f3<f4..., and the higher the humidity is, the lower the target maximum operable frequency of the compressor is, i.e., the maximum operable frequency of the compressor is negatively correlated with the indoor humidity.

For another example, in an embodiment of the present invention, said acquiring the target maximum operable frequency of the compressor of the air conditioner according to the current input voltage and the current actual rotation speed includes: inputing the current input voltage and the current actual rotation speed into a first correspondence prebuilt between both of the input voltage and the actual rotation speed, and the target maximum operable frequency, to acquire the target maximum operable frequency.

Said updating the target maximum operable frequency according to the current humidity includes: inputing the current input voltage, the current actual rotation speed and the current humidity into a second correspondence prebuilt between three of the input voltage, the actual rotation speed and the humidity, and the target maximum operable frequency, to reacquire the target maximum operable frequency.

In other words, a one-to-one correspondence of the input voltage, the actual rotation speed and the target maximum operable frequency may be prebuilt firstly, e.g. f=f(V, r), and then the target maximum operable frequency is updated according to the current humidity. The higher the humidity is, the lower the target maximum operable frequency of the compressor is, i.e., the target maximum operable frequency of the compressor may also be limited by the indoor humidity. The target maximum operable frequency may be reacquired according to the one-to-one correspondence of the input voltage, the actual rotation speed, the humidity and the target maximum operable frequency, e.g. f=f(V, r, Φ).

Technical solutions provided in above embodiments of the present invention have at least the following technical effects or advantages.

The technical solutions provided in embodiments of the present invention can limit the operating frequency of the compressor according to the current input voltage of the air conditioner, thereby effectively solving problems of the water blowing and dripping from the indoor heat exchanger when the input voltage is low, and thus improving reliability of the operation of the air conditioner.

Based on the same conception, the present invention further provides in embodiments a device corresponding to the method in embodiment 1 (refer to embodiment 2).

### Embodiment 2

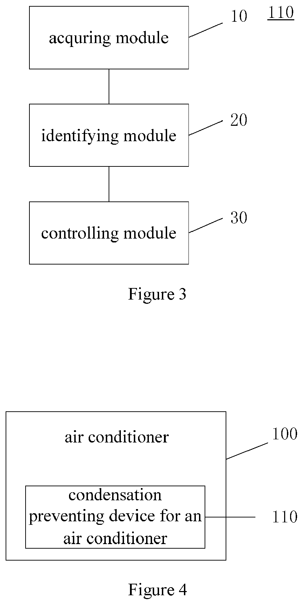

Figure 3 is a block diagram showing a condensation preventing device for an air conditioner in embodiment 2 of the present invention.

As showin in Figure 3, the condensation preventing device for an air conditioner includes:
an acquiring module 10, an identifying module 20 and a controlling module 30

The acquiring module 10 is configured to acquire a current input voltage of the air conditioner. The identifying module 20 is configured to identify that the air conditioner enters a low voltage operating state according to the current input voltage. The controlling module 30 is configured to limit an operating frequency of a compressor of the air conditioner according to the current input voltage.

In the invention, the controlling module 30, configured to limit an operating frequency of a compressor of the air conditioner according to the current input voltage, is specifically configured to: acquire a current actual rotation speed of an indoor fan of the air conditioner; acquire a target maximum operable frequency of the compressor of the air conditioner according to the current input voltage and the current actual rotation speed; and control the operating frequency of the compressor to be lower than or equal to the target maximum operable frequency.

In an embodiment of the present invention, the controlling module 30, configured to control the operating frequency of the compressor to be lower than or equal to the target maximum operable frequency, is further configured to: acquire a target minimum operable frequency of the compressor of the air conditioner; and control the operating frequency of the compressor to be higher than or equal to the target minimum operable frequency.

In an embodiment of the present invention, the controlling module 30, configured to control the operating frequency of the compressor to be higher than or equal to the target minimum operable frequency, is specifically configured to: acquire an indoor temperature, and acquire a dew point temperature according to the current humidity and the indoor temperature; and acquire a temperature of an indoor unit coil of the air conditioner, identify that the temperature of the indoor unit coil is lower than or equal to the dew point temperature, control a current operating frequency of the compressor to decrease and control a current decreased operating frequency to be higher than or equal to the target minimum operable frequency.

In the invention, the controlling module 30 is further configured to: update the target maximum operable frequency according to the current humidity.

In an embodiment of the present invention, the maximum operable frequency of the compressor is positively correlated with the input voltage of the air conditioner.

In an embodiment of the present invention, the maximum operable frequency of the compressor is positively correlated with the actual rotation speed of the indoor fan.

In an embodiment of the present invention, the maximum operable frequency of the compressor is negatively correlated with the indoor humidity.

It should be noted that, details that are not disclosed in the condensation preventing device for an air conditioner of embodiments in the present invention may refer to the above condensation preventing method for an air conditioner of embodiments in the present invention, which are not repeated here.

Technical solutions provided in above embodiments of the present invention have at least the following technical effects or advantages.

The technical solutions provided in embodiments of the present invention can limit the operating frequency of the compressor according to the current input voltage of the air conditioner, thereby effectively solving problems of the water blowing and dripping from the indoor heat exchanger when the input voltage is low, and thus improving reliability of the operation of the air conditioner.

### Embodiment 3

Based on the same conception, the present invention further provides in embodiments an air conditioner corresponding to the device in embodiment 2 (refer to embodiment 3).

Figure 4 is a block diagram showing an air conditioner in embodiment 3 of the present invention.

As shown in Figure 4, the air conditioner 100 includes a condensation preventing device 110 for an air conditioner as described above Technical solutions provided in above embodiments of the present invention have at least the following technical effects or advantages.

The technical solutions provided in embodiments of the present disclosure can limit the operating frequency of the compressor according to the current input voltage of the air conditioner, thereby effectively solving problems of the water blowing and dripping from the indoor heat exchanger when the input voltage is low, and thus improving reliability of the operation of the air conditioner.

### Embodiment 4

The present invention further provides in embodiments an electronic device, including: a memory; and a processor, wherein the processor executes, by reading an executable program code stored in the memory, a program corresponding to the executable program code, to achieve a condensation preventing method for for an air conditioner as described above.

Technical solutions provided in above embodiments of the present invention have at least the following technical effects or advantages.

The technical solutions provided in embodiments of the present 2. invention can limit the operating frequency of the compressor according to the current input voltage of the air conditioner, thereby effectively solving problems of the water blowing and dripping from the indoor heat exchanger when the input voltage is low, and thus improving reliability of the operation of the air conditioner.

### Embodiment 5

The present invention provides in embodiments a computer-readable storage medium having stored therein a computer program that, when executed by a processor, achieves a condensation preventing method for an air conditioner as described above.

Technical solutions provided in above embodiments of the present invention have at least the following technical effects or advantages.

The technical solutions provided in embodiments of the present invention can limit the operating frequency of the compressor according to the current input voltage of the air conditioner, thereby effectively solving problems of the water blowing and dripping from the indoor heat exchanger when the input voltage is low, and thus improving reliability of the operation of the air conditioner.

It should be understood by those skilled in the art, that the embodiments of this invention may be provided as methods, systems or computer program products. Therefore, the disclosure may adopt embodiments in forms of hardware only, software only, or a combination of software and hardware. Furthermore, the disclosure may adopt forms of computer program products executed on one or more computer usable storage media (including but not being limited to disk storage, CD-ROM and optical storage, etc.) containing computer usable program codes.

The present invention is described in reference to the method, the device (system) and the flowchart and/or a block diagram of a computer program product according to the embodiments of the present invention.

It should be understood that each process and/or block in the flowcharts and/or block diagrams, and combinations of processes and/or blocks in the flowcharts and/or block diagrams, may be realized by computer program instructions. These computer program instructions may be provided to a general-purpose computer, a special-purpose computer, an embedded processor, or processors of other programmable data processing devices, to create a machine, such that a device for realizing functions designated in one or more processes in the flowcharts and/or in one or more blocks in the block diagrams, may be created by instructions performed by a computer or processors of other programmable data processing devices.

These computer program instructions may further be stored in a computer readable storage that can boot a computer or other programmable data processing devices to work in a specific way, such that a manufactured goods comprising an instruction device may be created by the instructions stored in the said computer readable storage, and the said instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer, such that steps for realizing the functions designated in one or more processes in the flowcharts and/or in one or more blocks in the block diagrams may be provided by the instructions executed on the computer or other programmable data processing devices.

It is to be noted that in the claims, any reference sign placed between the parentheses shall not be construed as limiting to a claim. The word "comprise" does not exclude the presence of an element or a step not listed in a claim. The word "a" or "an" preceding an element does not exclude the presence of a plurality of such elements. The invention may be implemented by means of a hardware comprising several distinct elements and by means of a suitably programmed computer. In a unit claim enumerating several devices, several of the devices may be embodied by one and the same hardware item. Use of the words first, second, and third, etc. does not mean any ordering. Such words may be construed as naming.

## Claims

1. A condensation preventing method for an air conditioner, comprising:
acquiring a current input voltage of the air conditioner (S1);
identifying that the air conditioner enters a low voltage operating state according to the current input voltage (S2);
limiting an operating frequency of a compressor of the air conditioner according to the current input voltage (S3);
wherein limiting an operating frequency of a compressor of the air conditioner according to the current input voltage (S3) is **characterized in that** it further comprises:
acquiring a current actual rotation speed of an indoor fan of the air conditioner;
acquiring a target maximum operable frequency of the compressor of the air conditioner according to the current input voltage and the current actual rotation speed;
updating the target maximum operable frequency according to an acquired current indoor humidity;
controlling the operating frequency of the compressor to be lower than or equal to the target maximum operable frequency; and
controlling the operating frequency of the compressor to be reduced in accordance with the decrease of the input voltage.

2. The method according to claim 1, wherein controlling the operating frequency of the compressor to be lower than or equal to the target maximum operable frequency further comprises:
acquiring a target minimum operable frequency of the compressor of the air conditioner; and
controlling the operating frequency of the compressor to be higher than or equal to the target minimum operable frequency.

3. The method according to claim 2, wherein controlling the operating frequency of the compressor to be higher than or equal to the target minimum operable frequency further comprises:
acquiring an indoor temperature, and acquiring a dew point temperature according to the current humidity and the indoor temperature; and
acquiring a temperature of an indoor unit coil of the air conditioner, identifying that the temperature of the indoor unit coil is lower than or equal to the dew point temperature, controlling a current operating frequency of the compressor to decrease and controlling a current decreased operating frequency to be higher than or equal to the target minimum operable frequency.

4. The method according to claim 1, futher comprising: the target maximum operable frequency of the compressor being positively correlated with the current input voltage of the air conditioner.

5. The method according to claim 1 or 4, futher comprising: the target maximum operable frequency of the compressor being positively correlated with the current actual rotation speed of the indoor fan.

6. The method according to any one of claims 1 to 5, futher comprising: the maximum operable frequency of the compressor being negatively correlated with the indoor humidity.

7. A condensation preventing device (110) for an air conditioner, comprising:
an acquiring module (10), configured to acquire a current input voltage of the air conditioner;
an identifying module (20), configured to identify that the air conditioner enters a low voltage operating state according to the current input voltage;
a controlling module (30), configured to limit an operating frequency of a compressor of the air conditioner according to the current input voltage;
wherein the controlling module (30) is further configured to: acquire a current actual rotation speed of an indoor fan of the air conditioner;
acquire a target maximum operable frequency of the compressor of the air conditioner according to the current input voltage and the current actual rotation speed;
update the target maximum operable frequency according to an acquired current indoor humidity;
control the operating frequency of the compressor to be lower than or equal to the target maximum operable frequency; and
control the operating frequency of the compressor to be reduced in accordance with the decrease of the input voltage.

8. An air conditioner (100), comprising: a condensation preventing device (110) for an air conditioner according to claim 7.

9. An electronic device, comprising:
a memory; and
a processor, associated with the condensation preventing device according to claim 7,
wherein the processor executes, by reading an executable program code stored in the memory, a program corresponding to the executable program code, to cause the condensation preventing device to execute a condensation preventing method for an air conditioner according to any one of claims 1 to 6.

10. A computer-readable storage medium having stored therein a computer program that, when executed by a processor associated with the condensation preventing device according to claim 7, causes the condensation preventing device to execute a condensation preventing method for an air conditioner according to any one of claims 1 to 6.

## Patentansprüche

1. Kondensationsverhinderungsverfahren für eine Klimaanlage, Folgendes umfassend:
Erfassen einer aktuellen Eingangsspannung der Klimaanlage (S1);
Identifizieren, dass gemäß der aktuellen Eingangsspannung die Klimaanlage in einen Niederspannungs-Betriebszustand eintritt (S2);
Begrenzen einer Betriebsfrequenz eines Kompressors der Klimaanlage gemäß der aktuellen Eingangsspannung (S3);
wobei das Begrenzen einer Betriebsfrequenz eines Kompressors der Klimaanlage gemäß der aktuellen Eingangsspannung (S3) **dadurch gekennzeichnet ist, dass** es ferner Folgendes umfasst:
Erfassen einer aktuellen tatsächlichen Drehzahl eines Innenraumgebläses der Klimaanlage;
Erfassen einer maximalen betriebsfähigen Sollfrequenz des Kompressors der Klimaanlage gemäß der aktuellen Eingangsspannung und der aktuellen tatsächlichen Drehzahl;
Aktualisieren der maximalen betriebsfähigen Sollfrequenz gemäß einer erfassten aktuellen Innenraum-Luftfeuchte;
Steuern der Betriebsfrequenz des Kompressors derart, dass sie kleiner oder gleich der maximalen betriebsfähigen Sollfrequenz ist; und
Steuern der Betriebsfrequenz des Kompressors derart, dass sie verringert ist, gemäß der Abnahme der Eingangsspannung.

2. Verfahren nach Anspruch 1, wobei das Steuern der Betriebsfrequenz des Kompressors derart, dass sie kleiner oder gleich der maximalen betriebsfähigen Sollfrequenz ist, ferner Folgendes umfasst:
Erfassen einer minimalen betriebsfähigen Sollfrequenz des Kompressors der Klimaanlage; und
Steuern der Betriebsfrequenz des Kompressors derart, dass sie höher oder gleich der minimalen betriebsfähigen Sollfrequenz ist.

3. Verfahren nach Anspruch 2, wobei das Steuern der Betriebsfrequenz des Kompressors derart, dass sie höher oder gleich der minimalen betriebsfähigen Sollfrequenz ist, ferner Folgendes umfasst:
Erfassen einer Innenraumtemperatur und Erfassen einer Taupunkttemperatur gemäß der aktuellen Luftfeuchte und der Innenraumtemperatur; und
Erfassen einer Temperatur einer Spule einer Innenraumeinheit der Klimaanlage, Identifizieren, dass die Temperatur der Spule der Innenraumeinheit niedriger oder gleich der Taupunkttemperatur ist, Steuern einer aktuellen Betriebsfrequenz des Kompressors derart, dass sie sinkt, und Steuern einer aktuellen verminderten Betriebsfrequenz derart, dass sie höher oder gleich der minimalen betriebsfähigen Sollfrequenz ist.

4. Verfahren nach Anspruch 1, ferner Folgendes umfassend: dass die maximale betriebsfähige Sollfrequenz des Kompressors positiv mit der aktuellen Eingangsspannung der Klimaanlage korreliert ist.

5. Verfahren nach Anspruch 1 oder 4, ferner Folgendes umfassend: dass die maximale betriebsfähige Sollfrequenz des Kompressors positiv mit der aktuellen tatsächlichen Drehzahl des Innenraumgebläses korreliert ist.

6. Verfahren nach einem der Ansprüche 1 bis 5, ferner Folgendes umfassend: dass die maximale betriebsfähige Frequenz des Kompressors negativ mit der Innenraum-Luftfeuchte korreliert ist.

7. Kondensationsverhinderungsvorrichtung (110) für eine Klimaanlage, Folgendes umfassend:
ein Erfassungsmodul (10), das zum Erfassen einer aktuellen Eingangsspannung der Klimaanlage konfiguriert ist;
ein Identifizierungsmodul (20), das zum Identifizieren konfiguriert ist, dass gemäß der aktuellen Eingangsspannung die Klimaanlage in einen Niederspannungs-Betriebszustand eintritt;
ein Steuermodul (30), das zum Begrenzen einer Betriebsfrequenz eines Kompressors der Klimaanlage gemäß der aktuellen Eingangsspannung konfiguriert ist;
wobei das Steuermodul (30) ferner für Folgendes konfiguriert ist: Erfassen einer aktuellen tatsächlichen Drehzahl eines Innenraumgebläses der Klimaanlage;
Erfassen einer maximalen betriebsfähigen Sollfrequenz des Kompressors der Klimaanlage gemäß der aktuellen Eingangsspannung und der aktuellen tatsächlichen Drehzahl;
Aktualisieren der maximalen betriebsfähigen Sollfrequenz gemäß einer erfassten aktuellen Innenraum-Luftfeuchte;
Steuern der Betriebsfrequenz des Kompressors derart, dass sie kleiner oder gleich der maximalen betriebsfähigen Sollfrequenz ist; und
Steuern der Betriebsfrequenz des Kompressors derart, dass sie verringert ist, gemäß der Abnahme der Eingangsspannung.

8. Klimaanlage (100), Folgendes umfassend: eine Kondensationsverhinderungsvorrichtung (110) für eine Klimaanlage nach Anspruch 7.

9. Elektronisches Gerät, Folgendes umfassend:
einen Speicher; und
einen Prozessor, welcher der Kondensationsverhinderungsvorrichtung nach Anspruch 7 zugeordnet ist,
wobei der Prozessor durch Lesen eines ausführbaren Programmcodes, der in dem Speicher gespeichert ist, ein Programm ausführt, das dem ausführbaren Programmcode entspricht, um die Kondensationsverhinderungsvorrichtung zu veranlassen, ein Kondensationsverhinderungsverfahren für eine Klimaanlage nach einem der Ansprüche 1 bis 6 auszuführen.

10. Computerlesbares Speichermedium, in dem ein Computerprogramm gespeichert ist, das bei Ausführung durch einen Prozessor, welcher der
Kondensationsverhinderungsvorrichtung nach Anspruch 7 zugeordnet ist, die Kondensationsverhinderungsvorrichtung veranlasst, ein
Kondensationsverhinderungsverfahren für eine Klimaanlage nach einem der Ansprüche 1 bis 6 auszuführen.

## Revendications

1. Procédé permettant d'empêcher la condensation pour un climatiseur, comportant les étapes consistant à :
acquérir une tension d'entrée actuelle du climatiseur (S1) ;
identifier que le climatiseur entre dans un état de fonctionnement basse tension en fonction de la tension d'entrée actuelle (S2) ;
limiter une fréquence de fonctionnement d'un compresseur du climatiseur en fonction de la tension d'entrée actuelle (S3) ;
dans lequel l'étape consistant à limiter une fréquence de fonctionnement d'un compresseur du climatiseur en fonction de la tension d'entrée actuelle (S3) est **caractérisée en ce qu'**elle comporte par ailleurs les étapes consistant à :
acquérir une vitesse de rotation réelle actuelle d'un ventilateur intérieur du climatiseur ;
acquérir une fréquence de fonctionnement maximale cible du compresseur du climatiseur en fonction de la tension d'entrée actuelle et de la vitesse de rotation réelle actuelle ;
effectuer une mise à jour de la fréquence de fonctionnement maximale cible en fonction d'une humidité intérieure actuelle acquise ;
commander la fréquence de fonctionnement du compresseur pour qu'elle soit inférieure ou égale à la fréquence de fonctionnement maximale cible ; et
commander la fréquence de fonctionnement du compresseur pour la réduire en fonction de la diminution de la tension d'entrée.

2. Procédé selon la revendication 1, dans lequel l'étape consistant à commander la fréquence de fonctionnement du compresseur pour qu'elle soit inférieure ou égale à la fréquence de fonctionnement maximale cible comporte par ailleurs les étapes consistant à :
acquérir une fréquence de fonctionnement minimale cible du compresseur du climatiseur ; et
commander la fréquence de fonctionnement du compresseur pour qu'elle soit supérieure ou égale à la fréquence de fonctionnement minimale cible.

3. Procédé selon la revendication 2, dans lequel l'étape consistant à commander la fréquence de fonctionnement du compresseur pour qu'elle soit supérieure ou égale à la fréquence de fonctionnement minimale cible comporte par ailleurs les étapes consistant à :
acquérir une température intérieure et acquérir une température de point de rosée en fonction de l'humidité actuelle et de la température intérieure ; et
acquérir une température d'une bobine d'unité intérieure du climatiseur, identifier que la température de la bobine d'unité intérieure est inférieure ou égale à la température du point de rosée, commander une fréquence de fonctionnement actuelle du compresseur pour la diminuer et commander une fréquence de fonctionnement actuelle réduite pour qu'elle soit supérieure ou égale à la fréquence de fonctionnement minimale cible.

4. Procédé selon la revendication 1, comportant par ailleurs : le fait que la fréquence de fonctionnement maximale cible du compresseur est corrélée positivement avec la tension d'entrée actuelle du climatiseur.

5. Procédé selon la revendication 1 ou la revendication 4, comportant par ailleurs : le fait que la fréquence de fonctionnement maximale cible du compresseur est corrélée positivement avec la vitesse de rotation réelle actuelle du ventilateur intérieur.

6. Procédé selon l'une quelconque des revendications 1 à 5, comportant par ailleurs : le fait que la fréquence de fonctionnement maximale du compresseur est corrélée négativement avec l'humidité intérieure.

7. Dispositif permettant d'empêcher la condensation (110) pour un climatiseur, comportant :
un module d'acquisition (10), configuré pour acquérir une tension d'entrée actuelle du climatiseur ;
un module d'identification (20), configuré pour identifier que le climatiseur entre dans un état de fonctionnement basse tension en fonction de la tension d'entrée actuelle ;
un module de commande (30), configuré pour limiter une fréquence de fonctionnement d'un compresseur du climatiseur en fonction de la tension d'entrée actuelle ;
dans lequel le module de commande (30) est par ailleurs configuré pour : acquérir une vitesse de rotation réelle actuelle d'un ventilateur intérieur du climatiseur ;
acquérir une fréquence de fonctionnement maximale cible du compresseur du climatiseur en fonction de la tension d'entrée actuelle et de la vitesse de rotation réelle actuelle ;
effectuer une mise à jour de la fréquence de fonctionnement maximale cible en fonction d'une humidité intérieure actuelle acquise ;
commander la fréquence de fonctionnement du compresseur pour qu'elle soit inférieure ou égale à la fréquence de fonctionnement maximale cible ; et
commander la fréquence de fonctionnement du compresseur pour la réduire en fonction de la diminution de la tension d'entrée.

8. Climatiseur (100), comportant : un dispositif empêchant la condensation (110) pour un climatiseur selon la revendication 7.

9. Dispositif électronique, comportant :
une mémoire ; et
un processeur, associé au dispositif empêchant la condensation selon la revendication 7,
dans lequel le processeur exécute, en lisant un code de programme en mesure d'être exécuté qui est stocké dans la mémoire, un programme correspondant au code de programme en mesure d'être exécuté, pour amener le dispositif empêchant la condensation à exécuter un procédé empêchant la condensation pour un climatiseur selon l'une quelconque des revendications 1 à 6.

10. Support de stockage lisible par ordinateur ayant, stocké dans celui-ci, un programme informatique qui, quand il est exécuté par un processeur associé au dispositif empêchant la condensation selon la revendication 7, amène le dispositif empêchant la condensation à exécuter un procédé empêchant la condensation pour un climatiseur selon l'une quelconque des revendications 1 à 6.
